# EUROPEAN PATENT APPLICATION

(11) **EP 4 531 273 A1**
(43) Date of publication of application: **02.04.2025**
(21) Application number: 24814365.3
(22) Date of filing: 26.05.2024
(51) Int. Cl.: H02S 10/10, B01D 53/18

(54) **CARBON CAPTURE POWER GENERATION SYSTEM**

(30) Priority: 26.05.2023 CN 202310612602
(71) Applicant: Huaneng Clean Energy Research Institute, Beijing 102209 (CN)
(72) Inventor: FAN, Zian, Beijing 102209 (CN); GUO, Dongfang, Beijing 102209 (CN); LIU, Hanming, Beijing 102209 (CN); FAN, Jinhang, Beijing 102209 (CN); SUN, Beiqi, Beijing 102209 (CN); JIAO, Zengtong, Beijing 102209 (CN); LI, Ye, Beijing 102209 (CN); LIU, Lianbo, Beijing 102209 (CN); NIU, Hongwei, Beijing 102209 (CN)
(74) Representative: Petraz, Gilberto Luigi
(86) International application number: PCT/CN2024/095378
(87) International publication number: WO 2024/245168

(57) **Abstract**

Disclosed is a carbon capture power generation system. The carbon capture power generation system includes a thermal power supply unit, a photovoltaic power supply unit, a carbon capture assembly and a control unit, wherein the carbon capture assembly includes an absorption tower, a regeneration tower, a rich solution transfer tank and a lean solution transfer tank, an exhaust port of the thermal power supply unit is in communication with an air inlet of the absorption tower, a liquid outlet of the absorption tower is in communication with the rich solution transfer tank via a first branch, a liquid inlet of the absorption tower is in communication with the lean solution transfer tank via a second branch, a liquid inlet of the regeneration tower is in communication with the rich solution transfer tank via a third branch, a liquid outlet of the regeneration tower is in communication with the lean solution transfer tank via a fourth branch, the control unit can open the first branch and the second branch and close the third branch and the fourth branch when the thermal power supply unit supplies power to a power consumption side, and open the first branch, the second branch, the third branch and the fourth branch when the photovoltaic power supply unit supplies power to the power consumption side.

## Description

### CROSS-REFERENCE TO RELATED APPLICATION

This application claims priority to and benefits of Chinese Patent Application Serial No. 202310612602.1, filed with the China National Intellectual Property Administration on May 26, 2023, the entire content of which is incorporated herein by reference.

### FIELD

The present disclosure relates to a carbon capture technology field, and particularly relates to a carbon capture power generation system.

### BACKGROUND

With the continuous promotion of national energy strategy of carbon peaking and carbon neutrality, photovoltaic power generation industry has gained vigorous development in China, however, because photovoltaic power generation has obvious intermittency, so the operation mode of photovoltaic power generation is that photovoltaic power generator sets mainly supply power in the daytime, in order to maximize the consumption of power generation capacity of photovoltaic power generator sets, and thermal power generator sets mainly supply power at night time, in addition, when the photovoltaic power generator sets supply power in the daytime, the thermal power generator sets also need to maintain a low load operation state to serve as a peak shaving sets to supply power to a power grid at any time, in order to avoid affecting the stable operation of the power grid due to the volatility of the photovoltaic power generator sets.

In the related technology, due to limitations of technical conditions, the minimum technical output of thermal power sets in low load operation in China is about 50% of the rated capacity, i.e., at this time, the thermal power sets still have power output, which leads to unnecessary energy consumption, poor environmental protection and poor economy.

### SUMMARY

The present disclosure solves the technical problem that is in response to the defects and deficiencies of the related technology, a carbon capture power generation system is provided, the carbon capture power generation system converts the energy consumption of a regeneration tower, which is supposed to be borne by a thermal power generation unit at night, to be borne by a thermal power supply unit, which maintains a low load operation in the daytime, this is equivalent to decrease the minimum technical output of the thermal power supply unit, and enhance the environmental protection and economy of power grid operation.

The carbon capture power generation system of an embodiment of the present disclosure comprises: a thermal power supply unit and a photovoltaic power supply unit, the thermal power supply unit and the photovoltaic power supply unit are both configured to supply power to a power consumption side; a carbon capture assembly, the carbon capture assembly is electrically connected to the thermal power supply unit, and the carbon capture assembly comprises an absorption tower, a regeneration tower, a rich solution transfer tank and a lean solution transfer tank, an exhaust port of the thermal power supply unit is in communication with an air inlet of the absorption tower, a liquid outlet of the absorption tower is in communication with the rich solution transfer tank via a first branch, a liquid inlet of the absorption tower is in communication with the lean solution transfer tank via a second branch, a liquid inlet of the regeneration tower is in communication with the rich solution transfer tank via a third branch, a liquid outlet of the regeneration tower is in communication with the lean solution transfer tank via a fourth branch; a control unit, the control unit can open the first branch and the second branch and close the third branch and the fourth branch when the thermal power supply unit supplies power to the power consumption side, and open the first branch, the second branch, the third branch and the fourth branch when the photovoltaic power supply unit supplies power to the power consumption side.

The carbon capture power generation system according to an embodiment of the present disclosure, the thermal power supply unit and the photovoltaic power supply unit can be configured to supply power to the power consumption side, the carbon capture assembly comprises an absorption tower, a regeneration tower, a rich solution transfer tank, and a lean solution transfer tank, when the thermal power supply unit supplies power to the power consumption side, the flue gas generated by the thermal power supply unit is directly discharged to the absorption tower for absorbing carbon dioxide in the flue gas, and then the carbon dioxide rich liquid in the absorption tower can be discharged via a first branch to the rich solution transfer tank for storage, while the carbon dioxide lean liquid in the lean solution transfer tank can be discharged to the absorption tower via the second branch to ensure that the carbon dioxide absorption liquid in the absorption tower meets the operation requirements, at this time, the thermal power supply unit needs not provide power to the regeneration tower to make it operate, when the photovoltaic power supply unit supplies power to the power consumption side, the carbon dioxide rich liquid stored in the rich solution transfer tank can be discharged to the regeneration tower via the third branch for high temperature desorption, thereby releasing carbon dioxide and the carbon dioxide rich liquid converts into carbon dioxide lean liquid, and then the carbon dioxide lean liquid can be discharged via the fourth branch to the lean solution transfer tank for storage to prepare to discharge into the absorption tower when the thermal power supply unit is in operation, at this time, the power generated by the thermal power supply unit which maintains a low load operation in the daytime can be consumed by the regeneration tower, i.e., in the carbon capture power generation system of the present disclosure, the carbon capture assembly stores the carbon dioxide rich liquid generated by the operation of the thermal power supply unit at night to the daytime, the power generated by the thermal power supply unit at a low load operation is utilized to operate the regeneration tower for desorption in the daytime, the carbon dioxide lean liquid generated can be stored to the nighttime for reuse, thus a work mode of the carbon capture power generation system of nighttime capture and daytime desorption is formed, so that the power generated by the thermal power supply unit which maintains a low load operation in the daytime can be reasonably utilized, this is equivalent to reduce the minimum technical output of the thermal power supply unit, and enhance the economy and environmental protection of the operation of the power grid.

In some embodiments, the carbon capture assembly further comprises a heat exchanger, an inlet of a cold source chamber of the heat exchanger is in communication with the third branch, an outlet of the cold source chamber of the heat exchanger is in communication with a liquid inlet of the regeneration tower, an inlet of a heat source chamber of the heat exchanger is in communication with a liquid outlet of the regeneration tower, an outlet of the heat source chamber of the heat exchanger is in communication with the fourth branch.

In some embodiments, the absorption tower has an absorption cavity, a top wall of the absorption cavity is provided with a sprinkler pipe, the sprinkler pipe is in communication with the second branch, a bottom wall of the absorption cavity is provided with a first liquid collection trough, the first liquid collection trough is in communication with the first branch.

In some embodiments, a plurality of the sprinkler pipes are provided, and the plurality of the sprinkler pipes are spaced apart.

In some embodiments, the regeneration tower has a desorption cavity, a top wall of the desorption cavity is provided a plurality of sprayers spaced apart, the plurality of the sprayers all are in communication with the third branch, a bottom wall of the desorption cavity is provided a second liquid collection trough, the second liquid collection trough is in communication with the fourth branch.

In some embodiments, the first branch, the second branch, the third branch and the fourth branch all are provided with control valves, the control valves are electrically connected to the control unit, the control unit can control the opening and closing of the corresponding branch via the control valves.

In some embodiments, a surface of the rich solution transfer tank and/or the lean solution transfer tank is provided with a photovoltaic panel, and the photovoltaic panel is electrically connected to the control unit.

In some embodiments, the carbon capture assembly further comprises a warning device, the warning device is electrically connected to the photovoltaic panel, and the warning device may send an alarm when liquid volume in the rich solution transfer tank and in the lean solution transfer tank is below a warning value.

In some embodiments, the thermal power supply unit and the photovoltaic power supply unit are connected to the control unit via a signal cable.

### BRIEF DESCRIPTION OF THE DRAWINGS

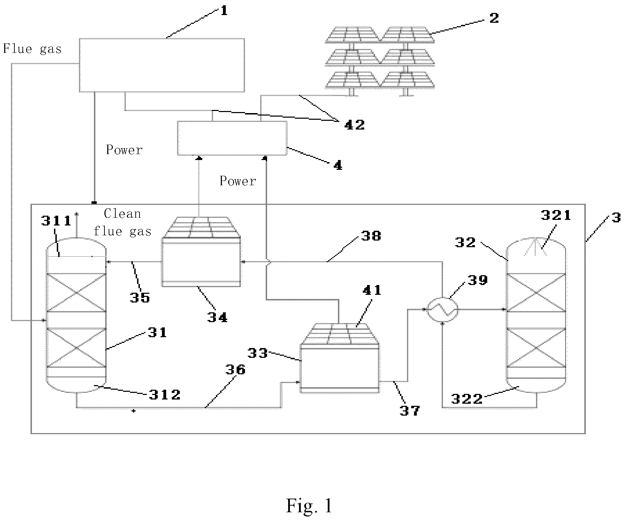

Fig. 1 is a structural schematic diagram of a carbon capture power generation system according to an embodiment of the present disclosure.

Reference signs:
thermal power supply unit 1, photovoltaic power supply unit 2, carbon capture assembly 3, absorption tower 31, sprinkler pipe 311, first liquid collection trough 312, regeneration tower 32, sprayer 321, second liquid collection trough 322, rich solution transfer tank 33, lean solution transfer tank 34, first branch 35, second branch 36, third branch 37, fourth branch 38, heat exchanger 39, control unit 4, photovoltaic panel 41, signal cable 42.

### DETAILED DESCRIPTION

Embodiments of the present disclosure will be described in detail below, and examples of the embodiments are shown in the drawings. The embodiments described below by reference to the drawings are exemplary and are intended to be used for explaining the present disclosure and are not to be understood as limitations of the present disclosure.

As shown in Fig. 1, the carbon capture power generation system of an embodiment of the present disclosure comprises a thermal power supply unit 1, a photovoltaic power supply unit 2, a carbon capture assembly 3, and a control unit 4.

Specifically, the thermal power supply unit 1 and the photovoltaic power supply unit 2 are both configured to supply power to a power consumption side, the carbon capture assembly 3 is electrically connected to the thermal power supply unit 1, and the carbon capture assembly 3 comprises an absorption tower 31 , a regeneration tower 32, a rich solution transfer tank 33, and a lean solution transfer tank 34, an exhaust port of the thermal power supply unit 1 is in communication with an air inlet of the absorption tower 31, a liquid outlet of the absorption tower 31 is in communication with the rich solution transfer tank 33 via a first branch 35, a liquid inlet of the absorption tower 31 is in communication with the lean solution transfer tank 34 via a second branch 36, a liquid inlet of the regeneration tower 32 is in communication with the rich solution transfer tank 33 via a third branch 37, a liquid outlet of the regeneration tower 32 is in communication with the lean solution transfer tank 34 via a fourth branch 38, the control unit 4 can open the first branch 35 and the second branch 36, and close the third branch 37 and the fourth branch 38 when the thermal power supply unit 1 supplies power to the power consumption side, and open the first branch 35, the second branch 36, the third branch 37 and the fourth branch 38 when the photovoltaic power supply unit 2 supplies power to the power consumption side.

It is to be noted that, in the carbon capture power generation system of an embodiment of the present disclosure, the thermal power supply unit 1 is mainly used to supply power to the power consumption side at night, the photovoltaic power supply unit 2 is used to supply power to the power consumption side in the daytime, when the thermal power supply unit 1 supplies power to the power consumption side, under the control of the control unit 4, the flue gas generated by the thermal power supply unit 1 is directly discharged to the absorption tower 31 to absorb the carbon dioxide in the flue gas, then the carbon dioxide rich liquid in the absorption tower 31 can be discharged to the rich solution transfer tank 33 for storage via the first branch 35, while the carbon dioxide lean liquid in the lean solution transfer tank 34 can be discharged to the absorption tower 31 via the second branch 36 to ensure that the carbon dioxide absorbing liquid in the absorption tower 31 meets the operation requirements, at this time, the thermal power supply unit 1 needs not provide power to the regeneration tower 32 to make it operate; when the photovoltaic power supply unit 2 supplies power to the power consumption side, under the control of the control unit 4, the carbon dioxide rich liquid stored in the rich solution transfer tank 33 can be discharged to the regeneration tower 32 via the third branch 37 for high temperature desorption, thus releasing carbon dioxide, and the carbon dioxide rich liquid converts into the carbon dioxide lean liquid, then the carbon dioxide lean liquid can be discharged to the lean solution transfer tank 34 via the fourth branch 38 for storage to prepare to discharge into the absorption tower 31 when the thermal power supply unit 1 is operating, at this time, the thermal power supply unit 1 which maintains a low load operation in the daytime supplies power to the regeneration tower 32 to consume the carbon dioxide rich liquid stored at night, i.e., the power produced by the thermal power supply unit 1 which maintains low load operation in the daytime, can be consumed by the regeneration tower 32.

It is understood that, in the carbon capture assembly 3, the regeneration tower 32 has high energy consumption, while the carbon capture power generation system of an embodiment of the present disclosure stores the carbon dioxide rich liquid generated by the operation of the thermal power supply unit 1 at night to the daytime, the power generated by the thermal power supply unit 1 at a low load operation is utilized to operate the regeneration tower 32 for desorption in the daytime, thereby a work mode of nighttime capture and daytime desorption is formed, so that the power generated by the thermal power supply unit 1 which maintains a low load in the daytime can be reasonably utilized, this is equivalent to reduce the minimum technical output of the thermal power supply unit 1, and enhance the economy and environmental protection of the carbon capture power generation system of an embodiment of the present disclosure.

It is to be understood that when the power supplies to the power consumption side, the conversion of the thermal power supply unit 1 and the photovoltaic power supply unit 2 should be adjusted according to difference of the regions and the seasons, when the operating time of the thermal power supply unit 1 is increased at night, the storage capacity of the corresponding lean solution transfer tank 34 needs to be increased, so as to ensure that the carbon dioxide generated by the thermal power supply unit 1 can be completely absorbed.

The carbon capture power generation system according to an embodiment of the present disclosure, the thermal power supply unit and the photovoltaic power supply unit can supply power to the power consumption side, the carbon capture assembly comprises an absorption tower, a regeneration tower, a rich solution transfer tank, and a lean solution transfer tank, when the thermal power supply unit supplies power to the power consumption side, the flue gas generated by the thermal power supply unit is directly discharged to the absorption tower for absorbing carbon dioxide in the flue gas, then the carbon dioxide rich liquid in the absorption tower can be discharged via a first branch to the rich solution transfer tank for storage, while the carbon dioxide lean liquid in the lean solution transfer tank can be discharged to the absorption tower via the second branch to ensure that the carbon dioxide absorbing liquid in the absorption tower meets the operation requirements, at this time, the thermal power supply unit needs not provide power to the regeneration tower to make it operate, when the photovoltaic power supply unit supplies power to the power consumption side, the carbon dioxide rich liquid stored in the rich solution transfer tank can be discharged to the regeneration tower via the third branch for high temperature desorption, thereby releasing carbon dioxide and the carbon dioxide rich liquid converts into carbon dioxide lean liquid, then the carbon dioxide lean liquid can be discharged via the fourth branch to the lean solution transfer tank for storage to prepare to discharge into the absorption tower when the thermal power supply unit is in operation, at this time, the power generated by the thermal power supply unit which maintains a low load operation in the daytime can be consumed by the regeneration tower, i.e., in the carbon capture power generation system of an embodiment of the present disclosure, the carbon capture assembly stores the carbon dioxide rich liquid generated by the operation of the thermal power supply unit at night to the daytime, the power generated by the thermal power supply unit at a low load operation is utilized to operate the regeneration tower for desorption in the daytime, the carbon dioxide lean liquid generated by the regeneration tower can be stored to the nighttime for reuse, thus a work mode of the carbon capture power generation system of nighttime capture and daytime desorption is formed, so that the power generated by the thermal power supply unit which maintains a low load operation in the daytime can be reasonably utilized, this is equivalent to reduce the minimum technical output of the thermal power supply unit, and enhance the economy and environmental protection of the operation of the power grid.

In some embodiments, as shown in Fig. 1, the carbon capture assembly 3 further comprises a heat exchanger 39, an inlet of a cold source chamber of the heat exchanger 39 is in communication with the third branch 37, an outlet of the cold source chamber of the heat exchanger 39 is in communication with a liquid inlet of the regeneration tower 32, an inlet of a hot source chamber of the heat exchanger 39 is in communication with a liquid outlet of the regeneration tower 32, and an outlet of the hot source chamber of the heat exchanger 39 is in communication with the fourth branch 38, i.e., the carbon dioxide rich liquid inputted from the liquid inlet of the regeneration tower 32 and the carbon dioxide lean liquid outputted from the liquid outlet of the regeneration tower 32 can exchange heat in the heat exchanger 39.

It should be noted that the carbon dioxide rich liquid in the rich solution transfer tank 33 is desorbed via the regeneration tower 32 at a high temperature and then discharged into the lean solution transfer tank 34 to become the carbon dioxide lean liquid, thereby the temperature of the carbon dioxide lean liquid is higher than the temperature of the carbon dioxide rich liquid, while the heat exchanger 39 can be preheated before the carbon dioxide rich liquid in the rich solution transfer tank 33 is inputted into the regeneration tower 32, so as to enhance the working efficiency of the regeneration tower 32 and reduce the energy consumption of the system.

In some embodiments, as shown in Fig. 1, the absorption tower 31 has an absorption cavity, a top wall of the absorption cavity is provided with a sprinkler pipe 311, the sprinkler pipe 311 is in communication with the second branch 36, a bottom wall of the absorption cavity is provided with a first liquid collection trough 312, the first liquid collection trough 312 is in communication with the first branch 35.

It is understood that the carbon dioxide lean liquid inputted into the absorption tower 31 from the second branch 36 can be sprinkled into the absorption cavity by the sprinkler pipe 311, in the absorption cavity, the carbon dioxide lean liquid will contact with the flue gas so as to absorb the carbon dioxide and converts into the carbon dioxide rich liquid, then the carbon dioxide rich liquid falls to the first liquid collection trough 312, and is uniformly discharged out of the absorption tower 31 via the first branch 35, thereby the carbon capture power generation system of an embodiment of the present disclosure realizes a diversion of the carbon dioxide rich liquid and the carbon dioxide lean liquid via the sprinkler pipe 311 and the first liquid collection trough 312 provided in the absorption tower 31, so as to enhance the utilization rate of the carbon dioxide lean liquid.

In some embodiments, as shown in Fig. 1, a plurality of the sprinkler pipes 311 are provided, the plurality of the sprinkler pipes 311 are spaced apart.

It is to be understood that the plurality of sprayers 311 can enhance the uniformity of the carbon dioxide lean liquid sprinkled, so that the carbon dioxide lean liquid sufficiently absorbs the carbon dioxide in the absorption cavity.

In some embodiments, as shown in Fig. 1, the regeneration tower 32 has a desorption cavity, a top wall of the desorption cavity is provided a plurality of sprays 321 spaced apart, the plurality of sprays 321 are all in communication with the third branch 37, a bottom wall of the desorption cavity is provided with a second liquid collection trough 322, the second liquid collection trough 322 is in communication with the fourth branch 38.

It is to be understood that the carbon dioxide rich liquid inputted to the absorption tower 31 from the third branch 37 can be sprayed into the desorption cavity via the sprayers 321, in desorption cavity, the carbon dioxide rich liquid converts into carbon dioxide lean liquid under the effect of high temperature desorption, then the carbon dioxide lean liquid falls down to the second liquid collection trough 322, and is uniformly discharged out of the regeneration tower 32 via the fourth branch 38, thereby, the carbon capture power generation system of an embodiment of the present disclosure realizes the diversion of the carbon dioxide lean liquid and the carbon dioxide rich liquid by the sprayer 321 and the second liquid collection trough 322 provided in the regeneration tower 32, so as to ensure that the carbon dioxide in the carbon dioxide rich liquid is sufficiently desorbed.

In some embodiments, as shown in Fig. 1, the first branch 35, the second branch 36, the third branch 37 and the fourth branch 38 are provided with control valves (not shown in drawings), the control valves are electrically connected to the control unit 4, the control unit 4 may control the opening and closing of the corresponding branch via the control valves, thereby it is facilitated that the control unit 4 quickly completes the switching of the working mode of the carbon capture assembly 3, the working efficiency of the carbon capture power generation system of an embodiment of the present disclosure is enhanced.

It is to be understood that the control valves can also be used to adjust the flow rate of the liquid in each branch, thereby the stability and reliability of the operation of the carbon capture assembly 3 are enhanced.

In some embodiments, as shown in Fig. 1, a surface of the rich solution transfer tank 33 and/or the lean solution transfer tank 34 is provided with a photovoltaic panel 41, the photovoltaic panel 41 is electrically connected to the control unit 4.

It should be noted that, in order to ensure that the flue gas discharged during the operation of the thermal power supply unit 1 can be normally absorbed by the carbon capture assembly 3, the capacity of the rich solution transfer tank 33 and the capacity of the lean solution transfer tank 34 need to be large enough, thus the rich solution transfer tank 33 and the lean solution transfer tank 34 can take up a large amount of site space, whereas in the carbon capture power generation system of an embodiment of the present disclosure, the surface of the rich solution transfer tank 33 and the lean solution transfer tank 34 can lay a photovoltaic panel 41, and the power generated by the photovoltaic panel 41 can be transmitted to the control unit 4 to maintain the operation of the control unit 4, thereby the utilization of site space is enhanced.

In some embodiments, as shown in Fig. 1, the carbon capture assembly 3 further comprises a warning device (not shown in drawings), the warning device is electrically connected to the photovoltaic panels 41, and the warning device can send an alarm when the liquid volume in the rich solution transfer tank 33 and in the lean solution transfer tank 34 is below a warning value.

It should be noted that when the liquid volume in the rich solution transfer tank 33 is below the warning value, the carbon dioxide rich liquid has finished converting by the regeneration tower 32, at this time, the regeneration tower 32 can be stopped operating, when the liquid in the rich solution transfer tank 33 stores in a certain volume, the regeneration tower 32 can be restarted, thus energy consumption of the system is saved, when the liquid volume in the lean solution transfer tank 34 is below the warning value, the carbon dioxide lean liquid can no longer meet the operation requirements of the absorption tower 31, at this time, the absorption tower 31 should be supplemented with newly prepared carbon dioxide absorption liquid, so as to ensure that the absorption tower 31 is normally operated, in an embodiment of the present disclosure, the warning device being provided can obtain such information in time, checking the information from time to time by staff workers is avoided and the work intensity is reduced.

In some embodiments, as shown in Fig. 1, the thermal power supply unit 1 and the photovoltaic power supply unit 2 are connected to the control unit 4 via a signal cable 42.

It is understood that when the thermal power supply unit 1 or the photovoltaic power supply unit 2 is operating, the start signals of the two can be quickly transmitted to the control unit 4 through the signal cable 42, thereby the response speed of the control unit 4 is accelerated and work efficiency of the present system is enhanced.

In the descriptions of the present disclosure, it is to be understood that the terms "center", "longitudinal", "transverse", "length", "width", "thickness", "on", "down", "front", "rear", "left", "right", "vertical", "horizontal", "top", "bottom", "inner", "outer", "clockwise", "counterclockwise", "axial", "radial", "circumferential", etc. indicate orientation or positional relationships based on those shown in drawings, are only intended to facilitate descriptions of the present disclosure and to simplify descriptions, and are not intended to indicate or imply that the device or element referred to must have a particular orientation, be constructed and operated in a particular orientation, therefore these terms cannot be understood as limitations of the present disclosure.

Moreover, the terms "first" and "second" are used for descriptive purposes only and cannot to be understood as indicating or implying relative importance or implicitly specifying the number of technical features indicated. Thus, a feature defined with the terms "first", "second" may expressly or impliedly include at least one such feature. In the descriptions of the present disclosure, "a plurality of" means at least two, such as two, three, etc., unless otherwise expressly and specifically limited.

In the present disclosure, unless specified or limited otherwise, the terms "mounted", "connected", "coupled", "fixed", and the like should be understood broadly and can be, such as a fixed connection, a removable connection, or a one-piece unit; as a mechanical connection, an electrical connection, or a communication with each other; as a direct connection, an indirect connection through an intermediate media, and inner communications or interactions of two elements, unless otherwise expressly limited. For those skilled in the art, the specific meaning of the above terms in the present disclosure can be understood according to the specific situations.

In the present disclosure, unless specified or limited otherwise, the first feature being "above" or "below" the second feature can be a direct contact between the first feature and the second feature, or an indirect contact between the first feature and the second feature through an intermediate media. Furthermore, the first feature being, "on", "above" and "upper" the second feature can be that the first feature is directly above or obliquely above the second feature, or only the first feature is horizontally higher than the second feature. The first feature being "below", "under" and "underneath" the second feature can be that the first feature is directly below or obliquely below the second feature, or only the first feature is horizontally lower than the second feature.

In the present disclosure, the terms "an embodiment", "some embodiments", "example", "a specific example", or "some examples" mean that the specific features, structures, materials, or characteristics described in connection with the embodiment or example are included in at least one embodiment or example of the present disclosure. In the present specification, schematic expressions of the above terms are not necessarily referring to the same embodiments or examples. Furthermore, the specific features, structures, materials, or characteristics described can be combined in any one or more embodiments or examples in a suitable manner. Moreover, without contradicting each other, those skilled in the art can combine and associate different embodiments or examples and features of different embodiments or examples described in the present specification.

Although the embodiments of the present disclosure have been shown and described above, it can be understood that the above embodiments are exemplary and are not to be understood as limitations of the present disclosure, and that those skilled in the art can make changes, modifications, substitutions, and variations of the above embodiments within the scope of the present disclosure.

## Claims

1. A carbon capture power generation system, comprising:
a thermal power supply unit and a photovoltaic power supply unit, the thermal power supply unit and the photovoltaic power supply unit both configured to supply power to a power consumption side;
a carbon capture assembly, the carbon capture assembly electrically connected to the thermal power supply unit, and the carbon capture assembly comprising an absorption tower, a regeneration tower, a rich solution transfer tank and a lean solution transfer tank, an exhaust port of the thermal power supply unit being in communication with an air inlet of the absorption tower, a liquid outlet of the absorption tower being in communication with the rich solution transfer tank via a first branch, a liquid inlet of the absorption tower being in communication with the lean solution transfer tank via a second branch, a liquid inlet of the regeneration tower being in communication with the rich solution transfer tank via a third branch, a liquid outlet of the regeneration tower being in communication with the lean solution transfer tank via a fourth branch;
a control unit, the control unit can open the first branch and the second branch and close the third branch and the fourth branch when the thermal power supply unit supplies power to the power consumption side, and open the first branch, the second branch, the third branch and the fourth branch when the photovoltaic power supply unit supplies power to the power consumption side.

2. The carbon capture power generation system according to claim 1, wherein the carbon capture assembly further comprises a heat exchanger, an inlet of a cold source chamber of the heat exchanger is in communication with the third branch, an outlet of the cold source chamber of the heat exchanger is in communication with a liquid inlet of the regeneration tower, an inlet of a heat source chamber of the heat exchanger is in communication with a liquid outlet of the regeneration tower, an outlet of the heat source chamber of the heat exchanger is in communication with the fourth branch.

3. The carbon capture power generation system according to claim 1 or claim 2, wherein the absorption tower has an absorption cavity, a top wall of the absorption cavity is provided with a sprinkler pipe, the sprinkler pipe is in communication with the second branch, a bottom wall of the absorption cavity is provided with a first liquid collection trough, and the first liquid collection trough is in communication with the first branch.

4. The carbon capture power generation system according to claim 3, wherein a plurality of the sprinkler pipes are provided, and the plurality of the sprinkler pipes are spaced apart.

5. The carbon capture power generation system according to any one of claims 1 to 4, wherein the regeneration tower has a desorption cavity, a top wall of the desorption cavity is provided with a plurality of sprayers spaced apart, the plurality of the sprayers are in communication with the third branch, a bottom wall of the desorption cavity is provided with a second liquid collection trough, the second liquid collection trough is in communication with the fourth branch.

6. The carbon capture power generation system according to any one of claims 1 to 5, wherein the first branch, the second branch, the third branch and the fourth branch all are provided with control valves, the control valves are electrically connected to the control unit, the control unit can control the opening and closing of the corresponding branch via the control valves.

7. The carbon capture power generation system according to any one of claims 1 to 6, wherein a surface of the rich solution transfer tank and/or the lean solution transfer tank is provided with a photovoltaic panel, the photovoltaic panel is electrically connected to the control unit.

8. The carbon capture power generation system according to claim 7, wherein the carbon capture assembly further comprises a warning device, the warning device is electrically connected to the photovoltaic panel, and the warning device can send an alarm when liquid volume in the rich solution transfer tank and in the lean solution transfer tank is below a warning value.

9. The carbon capture power generation system according to claim 7 or claim 8, wherein the thermal power supply unit and the photovoltaic power supply unit are connected to the control unit via a signal cable.
